# FASCICULE DE BREVET EUROPEEN

(11) **EP 0 392 418 B1**
(45) Date de publication et mention de la délivrance du brevet: **19.01.1994**
(21) Numéro de dépôt: 90106747.0
(22) Date de dépôt: 09.04.1990
(51) Int. Cl.: B61C 5/02, F01P 11/12, F04D 29/70, H02K 9/26

(54) **Dispositif de ventilation de moteur de traction ferroviaire et d'épuration de l'air de ventilation**
Vorrichtung zur Belüftung von Eisenbahnantriebsmotoren und zum Filtern von Zuführluft
Device for the ventilation of railway traction engines and for filtering the ventilation air

(30) Priorité: 14.04.1989 FR 8904971
(43) Date de publication de la demande: 17.10.1990
(73) Titulaire: GEC ALSTHOM SA, 75116 Paris (FR)
(72) Inventeur: Raguideau, Jean-Luc, F-75017 Paris (FR); Marichez, Jean-Louis, F-78700 Conflans Saint Honorine (FR); Gaignier, Jean-Pierre, F-25290 Ornans (FR); Piguel, Lucien, F-25290 Ornans (FR)
(74) Mandataire: Weinmiller, Jürgen

(56) Documents cités:
- FR-A- 1 337 644
- FR-A- 1 541 898
- FR-A- 2 194 879
- GB-A- 977 042

## Description

La présente invention concerne un dispositif de ventilation d'un moteur de traction ferroviaire et d'épuration dynamique de l'air de ventilation, comprenant un ventilateur centrifuge à aubes radiales entouré d'une enveloppe circulaire et refoulant l'air vers le moteur, des moyens de filtration dynamique sur le trajet de l'air refoulé par le ventilateur, et une tôle plane percée d'ouvertures de passage périphériques, formant écran diffuseur, divisant le volume intérieur à l'enveloppe circulaire en une chambre amont reliée à l'admission d'air au ventilateur et une chambre aval reliée au refoulement vers le moteur, comme décrit dans le document FR-A 1541898.

On a déjà proposé dans le document FR-A-1037867 d'assurer la ventilation des moteurs et des machines électriques d'une locomotive à l'aide d'un ventilateur centrifuge alimenté en air prélevé sur le toit de la locomotive, afin qu'il comprenne moins de poussières, et refoulant cet air à travers une cheminée latérale de la caisse vers un filtre à persiennes, destiné à éliminer les impuretés entraînées par l'air, telles que les gouttelettes d'eau, les flocons de neige, les grains de sable, les poussières. Une telle épuration n'est cependant pas complète, et il est nécessaire de disposer des filtres amovibles en amont des machines électriques exigeant un air de ventilation tout à fait pur.

Un tel dispositif de ventilation est complexe, assez bruyant, occupe un volume important de l'intérieur de la caisse, au détriment de l'espace nécessaire pour les différents appareillages, exige une perte de charge importante sur le circuit de l'air de ventilation, et nécessite des contrôles fréquents.

La présente invention a pour but de procurer un dispositif de ventilation de moteur de traction ferroviaire qui soit simple, peu bruyant, peu encombrant, n'entraîne qu'une perte de charge modérée sur le circuit d'air de ventilation, et ne nécessite des contrôles qu'à des intervalles de temps très espacés. Il a également pour but de permettre le cas échéant l'entraînement direct du ventilateur par l'arbre moteur et de prélever l'air sous le châssis de la locomotive, et d'éviter ainsi des conduits d'arrivée relativement longs jusqu'au moteur, tout en n'amenant au contact du moteur qu'un air bien épuré.

Le dispositif selon l'invention est caractérisé en ce qu'il comprend une ouverture d'évacuation d'air impur en forme de secteur sur le pourtour de la chambre amont, et un élément séparateur disposé en face de l'ouverture et formant obstacle détournant les filets d'air proches des aubes du ventilateur vers une section de prélèvement proche de l'ouverture d'évacuation.

Il répond en outre de préférence à au moins l'une des caractéristiques suivantes :
- Les ouvertures de passage périphériques de la tôle plane sont des trous percés dans cette tôle.
- Les ouvertures de passage périphériques de la tôle plane sont disposées en forme de persiennes.
- Il comporte un orifice reliant la zone périphérique de la chambre aval à la zone périphérique de la chambre amont, à proximité de l'ouverture d'évacuation d'air impur.
- La chambre aval est munie de moyens de redressement du flux d'air périphérique vers un écoulement axial.
- La chambre aval est munie d'une chicane circonférentielle sur le trajet de l'air de sa périphérie vers sa zone centrale.
- L'élément séparateur est de forme générale trapézoïdale, ses angles aigus étant du côté opposé à l'écran diffuseur.
- L'élément séparateur est en forme générale de parallélépipède, son angle aigu du côté opposé à l'écran diffuseur étant face à l'arrivée de l'air en rotation.

L'invention a également pour objet un véhicule ferroviaire comprenant un moteur de traction et le dispositif défini ci-dessus, le dispositif comportant une ouverture d'introduction de l'air de ventilation sous le châssis du véhicule.

L'invention a enfin pour objet un véhicule ferroviaire comprenant un moteur de traction et le dispositif défini ci-dessus, le ventilateur étant entraîné directement dans l'un et/ou l'autre des deux sens de rotation par l'arbre du moteur de traction.

Il est décrit ci-après, à titre d'exemples et en référence aux figures du dessin annexé, des dispositifs de ventilation de moteurs électriques de véhicule ferroviaire selon l'invention.
La figure 1 représente en plan vu du côté entrée d'air un dispositif de ventilation et d'épuration d'air dont la tôle formant écran diffuseur est une tôle perforée.
La figure 2 représente le dispositif de la figure 1 en coupe par un plan diamétral.
La figure 3 représente en plan vu du côté entrée d'air un dispositif de ventilation et d'épuration d'air dont la tôle formant écran diffuseur est en forme de persiennes de passage de l'air.
La figure 4 représente le dispositif de la figure 3 en coupe diamétrale.
La figure 5 est une vue en plan vu du côté entrée d'air du ventilateur au voisinage de l'ouverture d'évacuation d'air chargé de poussières ou de particules d'humidité, correspondant à l'axe V-V de la figure 6.
La figure 6 est une vue en élévation depuis l'intérieur de cette même zone du pourtour du dispositif, l'écran diffuseur étant représenté dans le haut de la figure.
La figure 7 est une vue en coupe diamétrale d'un dispositif de ventilation et d'épuration d'air comportant dans la chambre aval une chicane circonférentielle.

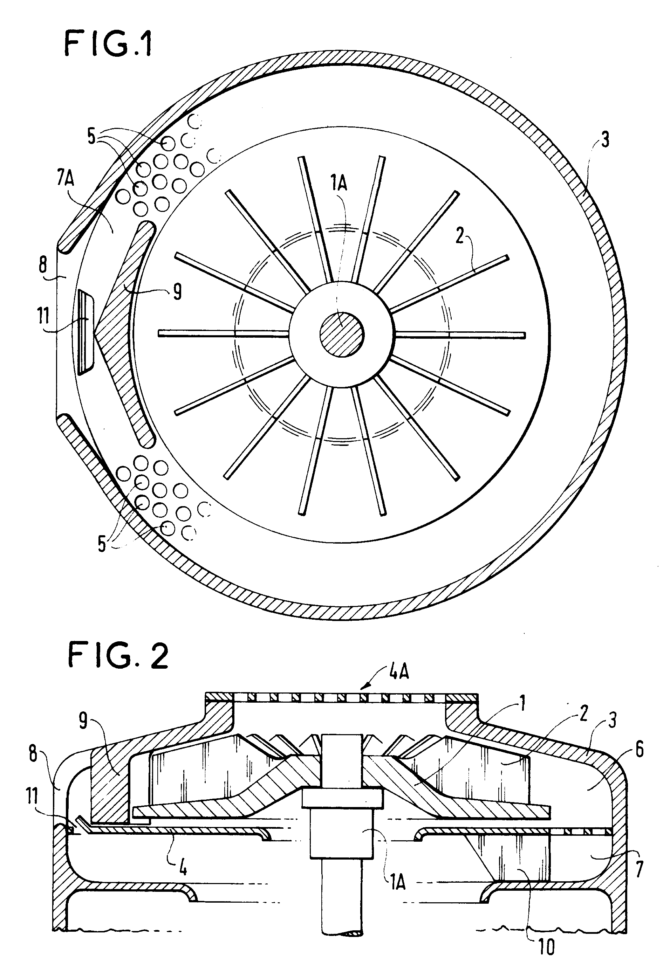

Dans les figures 1 et 2, le ventilateur centrifuge 1 d'axe 1A est muni d'aubes radiales 2. Il est enfermé dans une enveloppe circulaire 3. Le volume intérieur à cette enveloppe est divisé par une tôle plane 4 en une chambre amont 6, contenant le ventilateur, reliée par l'intermédiaire d'une grille de protection 4A à une ouverture d'introduction d'air ambiant (non représentée), disposée de préférence sous le châssis du véhicule, et une chambre aval 7, elle-même reliée à un conduit (non représenté) d'amenée d'air épuré au moteur électrique à refroidir. La tôle 4 est percée sur toute sa périphérie, à l'exception d'un secteur plein formant masque 7A, de trous 5 de communication entre les chambres amont et aval.

L'enveloppe 3 est percée en face du secteur 7A d'une ouverture 8 d'évacuation d'air chargé d'impuretés, ces dernières se concentrant sous l'effet de la force centrifuge près de l'enveloppe du ventilateur. En face de cette ouverture, un élément séparateur 9, de forme générale trapézoïdale ou parallélépipèdique en élévation, s'oppose à l'écoulement de l'air et oriente vers l'ouverture d'évacuation la fraction d'air enrichie en poussières ou particules d'humidité par la force centrifuge.

La chambre aval 7 est munie d'aubes 10 de redressement de l'écoulement de l'air parvenu dans sa zone externe à travers les trous 5, l'infléchissant vers le sens axial. Un orifice 11 débouchant dans l'orifice de sortie d'air chargé d'impuretés, permet l'évacuation d'une fraction d'air encore impur parvenu dans cette chambre.

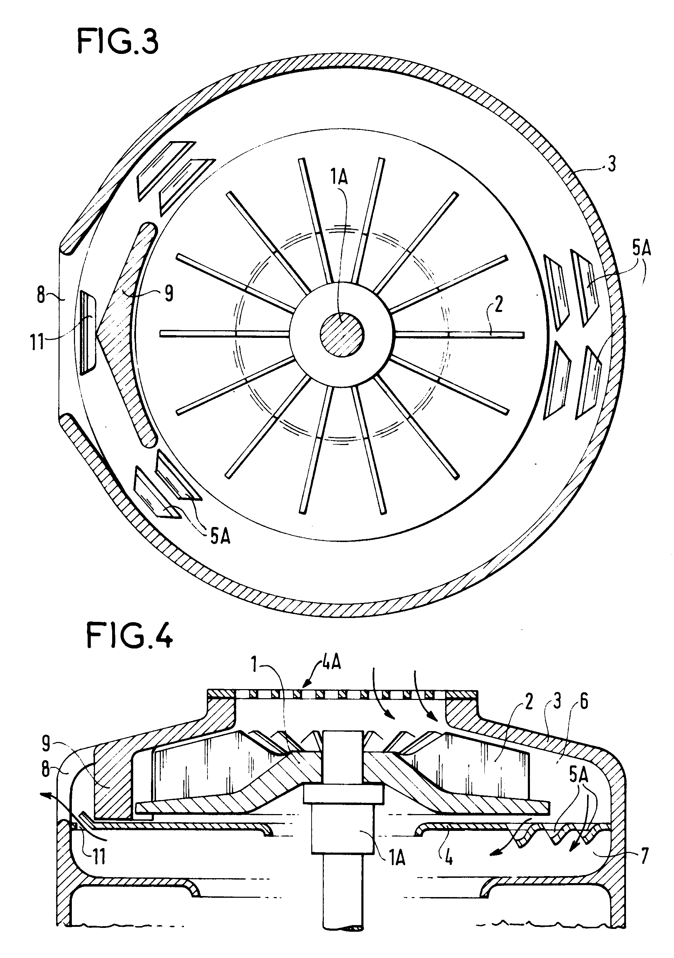

Le dispositif de ventilation et d'épuration des figures 3 et 4 est semblable dans une large mesure à celui des figures 1 et 2, et les éléments identiques ne seront pas décrits à nouveau. Mais la tôle plane 4 de séparation des chambres amont et aval est percée sur son pourtour d'ouvertures en forme de persiennes 5A (dont seules certaines ont été représentées) donnant à l'air qui y pénétre une direction centripète.

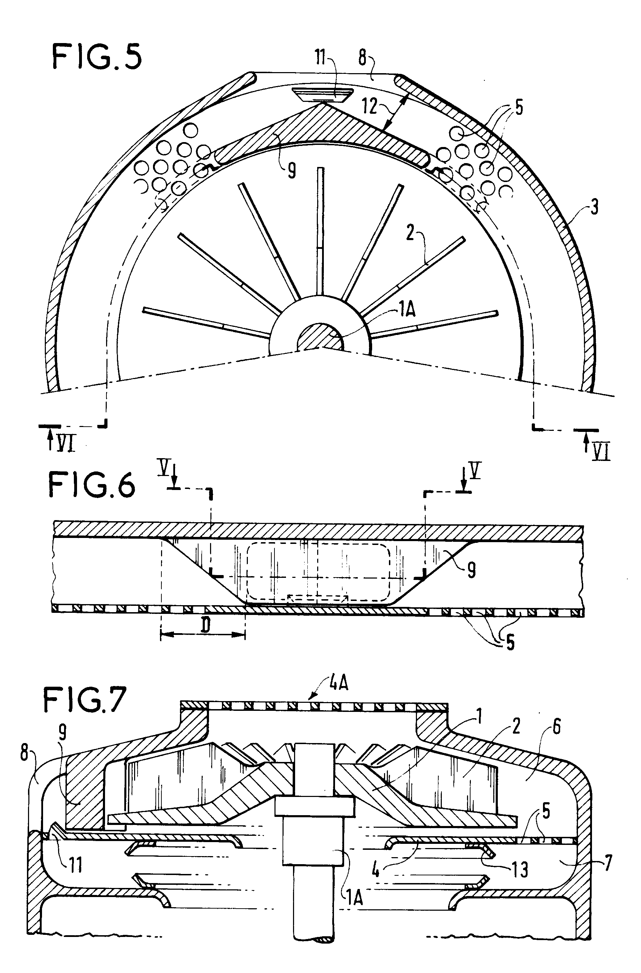

Les figures 5 et 6 représentent le secteur de l'ouverture 8 d'évacuation de l'air chargé de poussières ou de particules d'humidité, comportant en face de cette ouverture un élément séparateur 9 de forme trapézoïdale.

Ce trapèze présente ses angles aigus du côté opposé à la tôle de séparation des deux chambres du ventilateur, de sorte qu'il détourne les filets d'air refoulés par les pales du ventilateur, représentées en 2, vers la section de prélèvement représentée par la double flèche 12, puis vers l'ouverture d'évacuation 8. L'ouverture 11 à travers la tôle de séparation 4 permet à l'air contenant encore des poussières ou des particules d'humidité, circulant sur le pourtour de la chambre aval, de s'évacuer également par l'ouverture 8.

Dans le cas où l'élément 9 serait de forme parallélépipèdique, il présenterait le même angle aigu en face des filets d'air refoulés par les aubes.

Le biais du séparateur, représenté par la distance D dans un plan perpendiculaire à l'axe du ventilateur entre le fond et le haut du bord du séparateur, doit être d'environ 1,5 à 2 fois le pas des aubes, pour éviter un bruit excessif.

Dans le dispositif de la figure 7, la chambre amont 6 du ventilateur est identique à celle des figures 1 et 2, et la tôle de séparation 4 est également percée de trous 5 sur son pourtour. Mais la chambre aval 7 comporte une chicane circonférentielle 13, créant une certaine perte de charge sur le trajet de l'air et facilitant l'élimination par l'ouverture 11 d'une fraction périphérique d'air contenant encore des poussières ou particules d'humidité.

## Revendications

1. Dispositif de ventilation de moteur de traction ferroviaire et d'épuration dynamique de l'air de ventilation, comprenant un ventilateur centrifuge (1) à aubes radiales (2) entouré d'une enveloppe circulaire (3) et refoulant l'air vers le moteur, des moyens de filtration dynamique sur le trajet de l'air refoulé par le ventilateur, et une tôle plane (4) percée d'ouvertures de passage périphériques (5) formant écran diffuseur, divisant le volume intérieur à l'enveloppe circulaire en une chambre amont (6) reliée à l'admission d'air au ventilateur et une chambre aval (7) reliée au refoulement vers le moteur, caractérisé en ce qu'il comprend en outre une ouverture (8) d'évacuation d'air impur en forme de secteur sur le pourtour de la chambre amont, et un élément séparateur (9) disposé en face de l'ouverture et formant obstacle détournant les filets d'air proches des aubes du ventilateur vers une section de prélèvement proche de l'ouverture d'évacuation.

2. Dispositif selon la revendication 1, caractérisé en ce que les ouvertures de passage périphériques de la tôle plane sont des trous (5) percés dans cette tôle.

3. Dispositif selon la revendication 1, caractérisé en ce que les ouvertures de passage périphériques de la tôle plane sont disposées en forme de persiennes (5A).

4. Dispositif selon l'une des revendications 1 à 3, caractérisé en ce qu'il comporte un orifice (11) reliant la zone périphérique de la chambre aval (7) à la zone périphérique de la chambre amont (6), à proximité de l'ouverture d'évacuation d'air impur (8).

5. Dispositif selon l'une des revendications 1 à 4, caractérisé en ce que la chambre aval est munie de moyens de redressement du flux d'air périphérique vers un écoulement axial (10).

6. Dispositif selon l'une des revendications 1 à 5, caractérisé en ce que la chambre aval est munie d'une chicane circonférentielle (13) sur le trajet de l'air de sa périphérie vers sa zone centrale.

7. Dispositif selon l'une des revendications 1 à 6, caractérisé en ce que l'élément séparateur (9) est de forme générale trapézoïdale, ses angles aigus étant du côté opposé à l'écran diffuseur.

8. Dispositif selon l'une des revendications 1 à 6, caractérisé en ce que l'élément séparateur (9) est en forme générale de parallélépipède, son angle aigu du côté opposé à l'écran diffuseur étant face à l'arrivée de l'air en rotation.

9. Véhicule ferroviaire comprenant un moteur de traction et le dispositif selon l'une des revendications 1 à 8, caractérisé en ce que le dispositif comporte une ouverture d'introduction de l'air de ventilation sous le châssis du véhicule.

10. Véhicule ferroviaire comprenant un moteur de traction et le dispositif selon l'une des revendications 1 à 8, caractérisé en ce que l'entraînement du ventilateur est assuré directement par l'arbre du moteur, dans l'un et/ou l'autre des deux sens de rotation.

## Claims

1. A system for ventilating a rail traction motor and for dynamically purifying the ventilation air, the system comprising a centrifugal fan (1) having radial blades (2) surrounded by a circular housing (3) and delivering air to the motor, dynamic filter means on the path of the air delivered by the fan, and a plane sheet (4) pierced by peripheral through openings (5) forming a diffusing screen and dividing the inside volume of the circular housing into an upstream chamber (6) connected to the air inlet of the fan, and a downstream chamber (7) connected to its outlet leading to the motor, the system being characterized in that it further comprises an exhaust outlet (8) for exhausting impure air, the exhaust outlet being in the form of a sector on the periphery of the upstream chamber, and a separator element (9) disposed facing the opening and forming an obstacle to deflect air streams close to the blades of the fan towards a take-up section close to the exhaust opening.

2. A system according to claim 1, characterized in that the peripheral through openings in the plane sheet are holes (5) pierced through the sheet.

3. A system according to claim 1, characterized in that the peripheral through openings in the plane sheet are disposed in the form of louvers (5A).

4. A system according to any one of claims 1 to 3, characterized in that it includes an orifice (11) connecting the peripheral zone of the downstream chamber (7) to the peripheral zone of the upstream chamber (6) in the vicinity of the exhaust outlet (8) for impure air.

5. A system according to any one of claims 1 to 4, characterized in that the downstream chamber is provided with means for rectifying the peripheral flow of air towards an axial flow (10).

6. A system according to any one of claims 1 to 5, characterized in that the downstream chamber is provided with a circumferential baffle (13) on the path of the air going from its periphery towards the central zone.

7. A system according to any one of claims 1 to 6, characterized in that the separator element (9) is generally trapezoidal in shape, with its acute angles being on its side furthest from the diffusing screen.

8. A system according to any one of claims 1 to 6, characterized in that the separator element (9) is generally parallelepiped-shaped, with its acute angle furthest from the diffuser screen facing the inlet for rotating air.

9. A rail vehicle comprising a traction motor and a device according to any one of claims 1 to 6, characterized in that the device comprises a ventilation inlet opening under the chassis of the vehicle.

10. A rail vehicle comprising a traction motor and a device according to any one of claims 1 to 8, characterized in that the fan is driven directly by the motor shaft, in one and/or the other of its two directions of rotation.

## Patentansprüche

1. Vorrichtung zur Belüftung eines Eisenbahn-Antriebsmotors und zur dynamischen Säuberung der Belüftungsluft, mit einem Zentrifugalventilator (1), der radiale Schaufeln (2) umgeben von einer kreisförmigen Hülle (3) aufweist und die Luft zum Motor hin fördert, mit dynamischen Filtermitteln auf dem Weg der vom Ventilator geförderten Luft und mit einem flachen Blech (4) mit peripheren Durchlaßöffnungen (5), das einen Diffusorschirm bildet und das Innenvolumen der kreisförmigen Hülle in eine stromaufwärts liegende Kammer (6), die mit der Luftzufuhr zum Ventilator verbunden ist, und eine stromabwärts liegende Kammer (7) aufteilt, die mit dem Luftausgang zum Motor verbunden ist, dadurch gekennzeichnet, daß sie außerdem eine Auslaßöffnung (8) für unsaubere Luft in Form eines Sektors auf dem Umfang der stromaufwärts liegenden Kammer und ein Separatorelement (9) aufweist, das vor der Öffnung angeordnet ist und ein Hindernis bildet, das die Luftströme nahe den Schaufeln des Ventilators zu einem Entnahmeabschnitt nahe der Auslaßöffnung ableitet.

2. Vorrichtung nach Anspruch 1, dadurch gekennzeichnet, daß die peripheren Durchlaßöffnungen des flachen Blechs in dieses Blech gebohrte Löcher (5) sind.

3. Vorrichtung nach Anspruch 1, dadurch gekennzeichnet, daß die peripheren Durchlaßöffnungen des flachen Blechs als Lamellen (A) ausgebildet sind.

4. Vorrichtung nach einem der Ansprüche 1 bis 3, dadurch gekennzeichnet, daß sie eine Öffnung (11) aufweist, die den peripheren Bereich der stromabwärts liegenden Kammer (7) mit dem peripheren Bereich der stromaufwärts liegenden Kammer (6) in der Nähe der Auslaßöffnung (8) für unsaubere Luft verbindet.

5. Vorrichtung nach einem der Ansprüche 1 bis 4, dadurch gekennzeichnet, daß die stromabwärts liegende Kammer mit Mitteln (10) zum Ausrichten des peripheren Luftstroms auf einen axialen Auslaß versehen ist.

6. Vorrichtung nach einem der Ansprüche 1 bis 5, dadurch gekennzeichnet, daß die stromabwärts liegende Kammer mit einer Umfangsschikane (13) auf dem Weg der Luft von ihrer Peripherie zu ihrem zentralen Bereich versehen ist.

7. Vorrichtung nach einem der Ansprüche 1 bis 6, dadurch gekennzeichnet, daß das Separatorelement (9) allgemein Trapezform hat, wobei seine spitzen Winkel sich auf der dem Diffusorschirm entgegengesetzten Seite befinden.

8. Vorrichtung nach einem der Ansprüche 1 bis 6, dadurch gekennzeichnet, daß das Separatorelement (9) eine allgemein parallelepipedische Form hat, wobei sein spitzer Winkel auf der dem Diffusorschirm entgegengesetzten Seite vor dem Einlaß der drehenden Luft liegt.

9. Schienenfahrzeug mit einem Bahnmotor und der Vorrichtung nach einem der Ansprüche 1 bis 8, dadurch gekennzeichnet, daß die Vorrichtung eine Öffnung zur Einführung der Belüftungsluft unter das Chassis des Fahrzeugs aufweist.

10. Schienenfahrzeug mit einem Bahnmotor und der Vorrichtung nach einem der Ansprüche 1 bis 8, dadurch gekennzeichnet, daß der Ventilator direkt in einer und/oder der anderen der beiden Drehrichtungen durch die Welle des Bahnmotors angetrieben wird.
